# EUROPÄISCHE PATENTANMELDUNG

(11) **EP 1 469 210 A2**
(43) Veröffentlichungstag der Anmeldung: **20.10.2004**
(21) Anmeldenummer: 04008193.7
(22) Anmeldetag: 05.04.2004
(51) Int. Cl.: F16C 11/04, E06B 3/54, E04B 2/88, E04F 13/08

(54) **Verbindungselement zwischen Lagerungselement und Platte**

(30) Priorität: 13.04.2003 DE 10317081
(71) Anmelder: Espich, Gerhard, 12621 Berlin (DE)
(72) Erfinder: Espich, Gerhard, 12621 Berlin (DE)
(74) Vertreter: Burghardt, Dieter, Dipl.-Ing.

(57) **Zusammenfassung**

Die Erfindungsaufgabe, ein Verbindungselement (1) zwischen Platte (3) und Lagerungselement (4) zu schaffen, bei dem möglichst kleine Momente aus dem Verbindungselement (1) zwischen Tragkonstruktion und Platte (3) in eine Platte übertragen werden, wurde erfindungsgemäß dadurch gelöst, daß das Verbindungselement (1) rohr-, topf- oder nietartig ausgebildet ist und zur Einleitung der statisch wirkenden Belastungen vom Lagerungselement (4) auf die Platte (3) mindestens ein punkt-, linien- oder flächenförmiges Lasteinleitungselement an statisch günstiger oder konstruktiv gewollter Stelle am Verbindungselement (1) angeordnet ist.

## Beschreibung

Die vorliegende Erfindung betrifft ein Verbindungselement zwischen einem Lagerungselement für Platten an einer Tragkonstruktion und einer Platte aus vorwiegend spröden oder anderen empfindlichen Materialien unter besonderer Berücksichtigung einer Verbindung zwischen Lagerungselement und Platte mit möglichst wenig Biegemomenten-Eintrag aus dieser Verbindung in die Platte.

Die übliche Befestigung von Platten erfolgt über mindestens drei, im allgemeinen über vier punktförmige Lagerungselemente an einer Tragkonstruktion zum Beispiel von Bauwerken. Bilden solche Platten die äußere Schale, dann sind diese Platten z.B. der Witterung und Windbelastung ausgesetzt. Sofern die verwendeten Platten aus spröden Materialien bestehen, ist, wie es z.B. bei Glas- und Keramikplatten gegeben ist, eine Verbindung zwischen dem Lagerungselement und der Platte erforderlich, durch die möglichst wenig Biegemomente in die Platte eingeleitet werden. Solche Platten können bekanntlich keine großen Biegezugspannungen aufnehmen.

Aus der DE 100 04 253 ist ein Lagerungselement bekannt, bei dem eine Platte wahlweise formschlüssig und/oder kraftschlüssig mit einem arm- oder gabelförmigen Aufnahmeelement bzw. Verbindungselement verbunden ist. Diese Lösung schließt keine Ausgestaltung des Aufnahmeelementes bzw. Verbindungselementes zur Platte ein.

Alle weiterhin bekannten Lösungen vermeiden nicht ein Einleiten von Biegezugspannungen in die zu verbindende Platte mit einer Tragkonstruktion, die durch die Verbindung zwischen Lagerungselement und Platte entstehen.

Dieses aufgezeigte Problem ist bisher ungelöst geblieben, weil die Bedeutung dieser Belastungen nicht erkannt wurde. Insbesondere ist das Problem in den Randzonen von Ausnehmungen in der Platte zur Befestigung von Verbindungselementen unerkannt geblieben.

Ziel der Erfindung ist es, den Bauaufwand einer Verbindung zwischen Lagerungselementen und Platte zu reduzieren, den Wartungsaufwand und konstruktiven Aufwand für diese Verbindung zwischen Lagerungselementen und Platte zu minimieren.

Der Erfindung liegt die Aufgabe zugrunde, ein Verbindungselement zwischen Platte und Lagerungselement zu schaffen, bei dem möglichst kleine Momente aus dem Verbindungselement zwischen Tragkonstruktion und Platte in eine Platte übertragen werden.

Diese Aufgabe wird mit der in dem unabhängigen Anspruch 1 offenbarten technischen Lösung realisiert. Die Angaben in den abhängigen Ansprüchen dienen der weiteren Ausgestaltung der Lehre nach Anspruch 1.

Die Erfindung soll nachfolgend an Ausführungsbeispielen näher erläutert werden. In der zugehörigen Zeichnung zeigen:

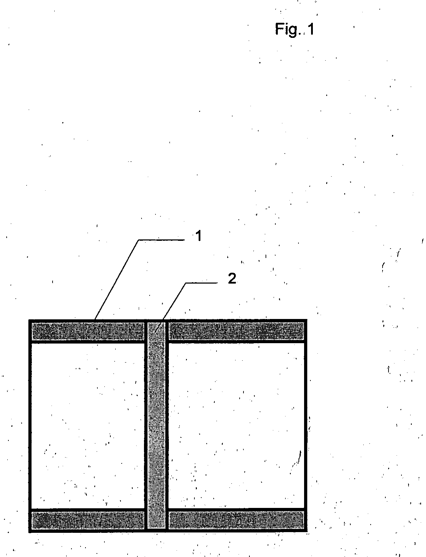

- Fig. 1: Darstellung eines rohrartig ausgebildeten Verbindungselementes im Schnitt, in der Ausführung mit einem kreisrunde Querschnitt,

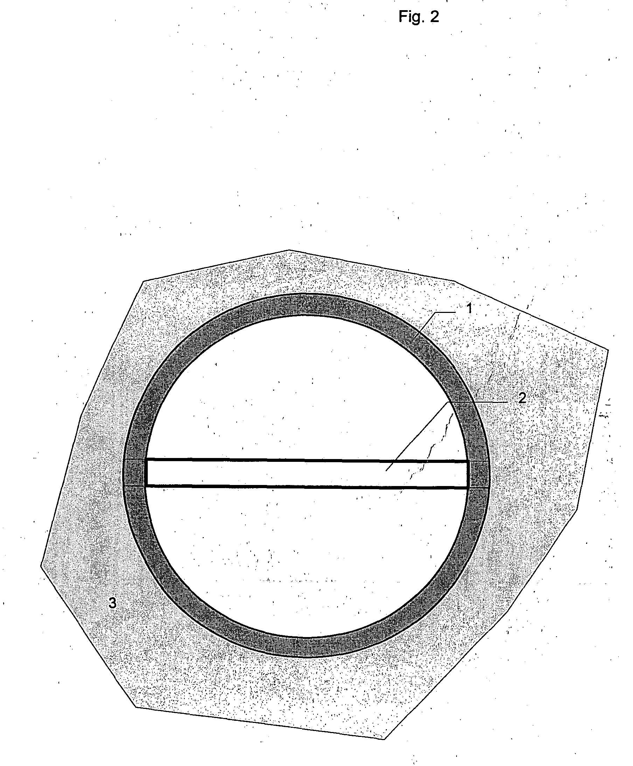

- Fig. 2: eine Darstellung nach Fig. 1 in einer um 90° gedrehten Ansicht,

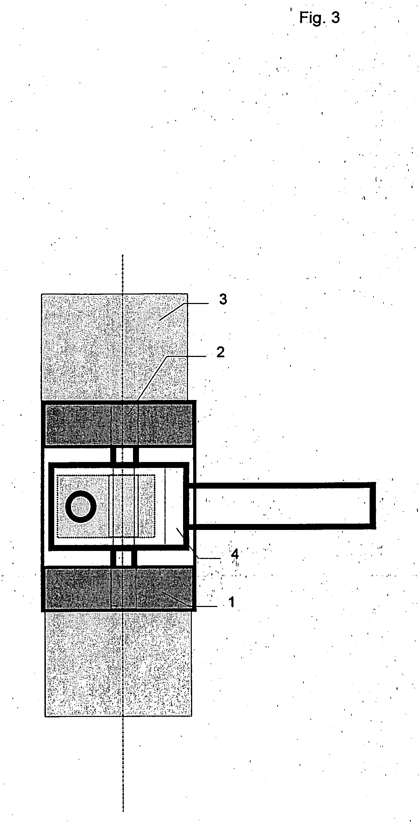

- Fig. 3: Darstellung einer Ausführung unter Verwendung einer Kreuzgelenkverbindung mit einem Achsen-Kreuzgelenkstück mit einem rohrartig ausgebildeten Verbindungselement,

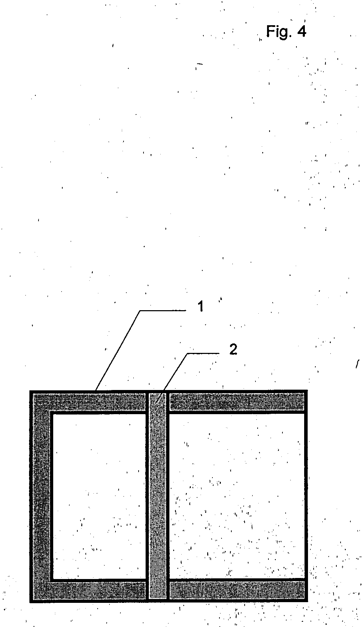

- Fig. 4: Darstellung eines topfartig ausgebildeten Verbindungselementes im Schnitt, in der Ausführung Rohr mit kreisrundem Querschnitt und mit Boden,

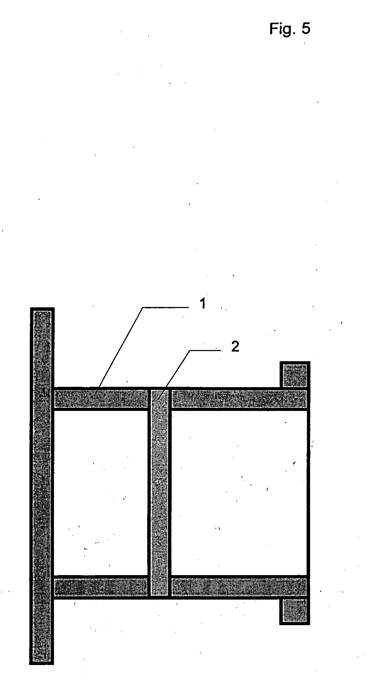

- Fig. 5: Darstellung eines nietartigen Verbindungselementes im Schnitt, in der Ausführung als Rohr mit kreisrundem Querschnitt und mit Boden und Kragen,

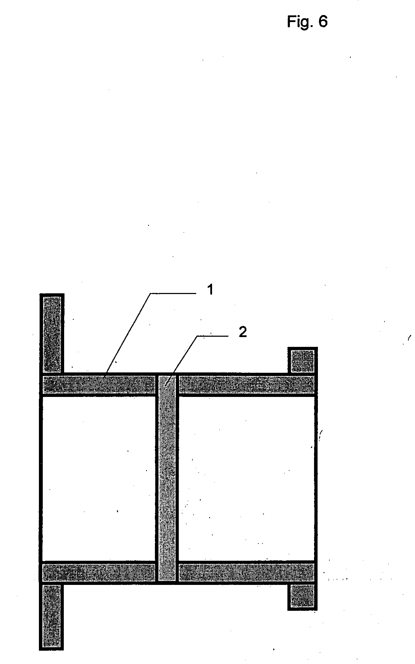

- Fig. 6: Darstellung eines nietartigen Verbindungselementes im Schnitt, in der Ausführung Rohr mit kreisrundem Querschnitt und mit beidseitigen Kragen,

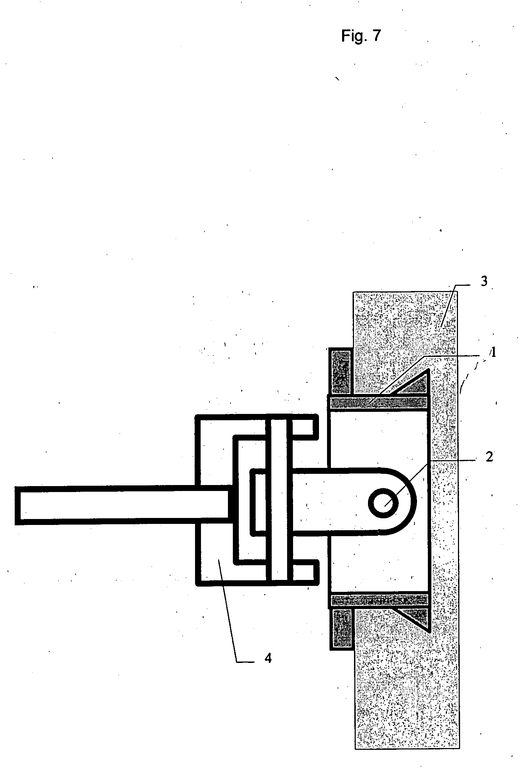

- Fig. 7: Darstellung eines nietartiges Verbindungselementes im Schnitt, in der Ausführung Rohr mit kreisrundem Querschnitt und mit einseitigen Kragen sowie mit einseitigen Rand in Form eines Hinterschnittes.

Ein Lagerungselement 4 dient der Befestigung von Platten 3 an einer nicht dargestellten Unterkonstruktionen. Dabei ist ein Übergang zwischen dem Lagerungselement 4 und der Platte 3 mit einem Verbindungselement 1 herzustellen.

Dieses Verbindungselement 1 ist rohr-, topf- oder nietartig ausgebildet. Das Grundelement ist ein Rohr. Als Topf erhält dieses Rohr einen Boden. Ein Element ist nietartig, wenn ein Rohr mit wahlweise ein- oder beidseitigen Rändern oder Kragen, wahlweise einschließlich Deckel, ausgebildet ist. Die Querschnittsform in beiden Richtungen, d.h. in der Ebene der Platte 3 und senkrecht zur Ebene der Platte 3 ist frei wählbar, solange die Funktion des Lagerungselementes 4 insgesamt erhalten bleibt. So kann der Querschnitt z.B. kreisrund, rechteckig oder dreieckig ausgebildet sein.

Das erfindungsgemäß rohr-, topf- oder nietartig ausgebildete Verbindungselement 1 wird auf die Platte 3 aufgesetzt und / oder in eine nicht dargestellte Ausnehmung, die zum Querschnitt des Verbindungselementes 1 paßt, z.B. in eine Bohrung in der Platte 3 eingebaut. Die Ausnehmung und wahlweise mit ihr das rohr-, topf- oder nietartige Verbindungselement 1 kann wahlweise eine oder mehrere Schichten der Platte, sofern diese mehrschichtig aufgebaut ist, ganz oder teilweise durchdringen.

Es werden die statisch wirkenden Lastangriffspunkte aus dem Lagerungselement 4 an statisch günstiger oder konstruktiv gewollter Stelle des Verbindungselementes 1 angeordnet. Die statisch günstige Stelle wird in jedem Einzelfall ermittelt, sie ist abhängig von z.B. dem Material und dem Schichtaufbau der Platte 3. Die konstruktiv günstige Stelle wird z.B. durch gestalterische u.a. Forderungen bestimmt. Mindestens die Wandung und wahlweise der Boden sowie weitere mit der Wandung verbundene Elemente dieses rohr-, topf- oder nietartigen Verbindungselementes 1 werden zur Übertragung der Belastungen aus der Platte 3 in das Lagerungselement 4 benutzt.

Die Verbindung zwischen dem rohr-, topf- oder nietartigen Verbindungselement 1 und der Platte 3 kann durch bekannte Arten des Form- oder Kraftschlusses erfolgen. Hierfür eignen sich unter anderem Spreiz- und Hinterschnitt-Konstruktionen, Mörtel, Klebstoffe, Kragen, Ränder usw.. Wahlweise werden an mindestens einer Stelle, z.B. auf einer Seite des Verbindungselementes 1, Elemente zum Form- und Kraftschluß angeordnet, z. B. ein tellerförmiges Element beliebiger Form in Plattenebene, und mit dem rohr-, topf- oder nietartigen Verbindungselement 1 kraftund/oder formschlüssig verbunden. Diese tellerförmigen Elemente können auch Ausschnitte, z.B. im Bereich des rohr-, topf- oder nietartigen Verbindungselementes 1, haben.

Bei Verwendung einer Kreuzgelenkverbindung als Lagerungselement 4, bestehend aus Aufnahmeelementen, die über Achsen und das die Gelenkachsen verbindende Kreuzgelenkstück miteinander kardanisch verbunden sind, ist die Länge des Kreuzgelenkstückes den Bedingungen so anzupassen, daß die vorgesehene Bewegung möglich ist. Der Abstand der Gelenkachsen zueinander ist beliebig. Mit dieser Anordnung wird die Eintragung von Momenten in die Platte 3 aus dem Lagerungselement 4 heraus reduziert oder ganz vermieden.

Ein Schutz vor äußeren Einflüssen ist durch kugel- oder schlauchartige Schutzkappen, Deckel oder Ausschäumung der Hohlräume und / oder Umschäumung aller Elemente mittels hochelastischer Materialien erzielbar.

Der Vorteil der vorliegenden Lösung liegt darin, daß eine Aufnahme der Platte 3 an einem die Verbindung zwischen Tragkonstruktion und Platte 3 herstellenden Verbindungselement 4 spannungsfrei bzw. ohne Einleitung von Momenten erfolgen kann und damit die Belastung an dem die Befestigung der Platte 3 mit einer Aufnahme herstellenden Bauelement gering gehalten werden kann. Die Folge sind geringe Kosten für die Konstruktionselemente, für Wartung und Investition.

### Aufstellung der verwendeten Bezugszeichen

- 1.: rohr-, topf- oder nietartiges Verbindungselement
- 2.: Lasteinleitungselement
- 3.: Platte
- 4.: Lagerungselement

## Patentansprüche

1. Verbindungselement zwischen Lagerungselement und Platte, ***dadurch gekennzeichnet,* daß** das Verbindungselement (1) rohrtopf- oder nietartig ausgebildet ist.

2. Verbindungselement zwischen Lagerungselement und Platte nach Anspruch 1, ***dadurch gekennzeichnet,* daß** mindestens ein punkt-, linien- oder flächenförmiges Lasteinleitungselement (2) an statisch günstiger oder konstruktiv gewollter Stelle am Verbindungselement (1) angeordnet ist.

3. Verbindungselement zwischen Lagerungselement und Platte nach Anspruch 1 und 2, ***dadurch gekennzeichnet,* daß** die rohr-, topf- oder nietartige Querschnittsform des Verbindungselementes (1) in zwei Richtungen, d.h. in Plattenebene und senkrecht zur Plattenebene unter Berücksichtigung der Öffnung für das Lagerungselement (1) frei wählbar ist.

4. Verbindungselement zwischen Lagerungselement und Platte nach Anspruch 1 bis 3, **dadurch gekennzeichnet, daß** das Verbindungselement (1) auf die Platte aufgesetzt und / oder in eine Ausnehmung, z.B. Bohrung, in der Platte eingebaut ist.

5. Verbindungselement zwischen Lagerungselement und Platte nach Anspruch 1 bis 4, ***dadurch gekennzeichnet,* daß** die Ausnehmung und wahlweise mit ihr das rohr-, topf- oder nietartig ausgebildete Verbindungselement (1) mindestens eine und wahlweise mehrere Schichten der Platte (3) wahlweise ganz oder teilweise durchdringen.

6. Verbindungselement zwischen Lagerungselement und Platte nach Anspruch 1 bis 5, **dadurch gekennzeichnet, daß** zwischen dem rohr-, topf- oder nietartigen Verbindungselement (1) und der Platte (3) eine durch bekannte Mittel des Form- und / oder Kraftschlusses herbeigeführte Verbindung besteht.

7. Verbindungselement zwischen Lagerungselement und Platte nach Anspruch 1 bis 6, **dadurch *gekennzeichnet,* daß** das Verbindungselement (1) vor äußeren Einflüssen schützende Abdeckelemente vorgesehen sind.

8. Verbindungselement zwischen Lagerungselement und Platte nach Anspruch 1 bis 7, ***dadurch gekennzeichnet,* daß** als Abdeckelemente kugel- oder schlauchartige Schutzkappen, Deckel eingesetzt sind.

9. Verbindungselement zwischen Lagerungselement und Platte nach Anspruch 1 bis 8, ***dadurch gekennzeichnet,* daß** für alle Hohlraume zwischen Platte (3) und Verbindungselement (1) Hohlraume verschließende hochelastische Materialien oder Ausschäumungen der Hohlräume und / oder Umschäumungen aller Elemente vorgesehen sind.
